# EUROPEAN PATENT APPLICATION

(11) **EP 3 954 485 A1**
(43) Date of publication of application: **16.02.2022**
(21) Application number: 20195693.5
(22) Date of filing: 11.09.2020
(51) Int. Cl.: B23G 1/26

(54) **TAP TOOL HOLDER**

(30) Priority: 10.08.2020 CN 202021644976 U
(71) Applicant: New Era Al Robotic Inc., 105 Taipei City (TW)
(72) Inventor: CHEN, Ting-Shuo, 105 Taipei City (TW); CHIA, Po-Chun, 105 Taipei City (TW)
(74) Representative: 2K Patentanwälte Blasberg Kewitz & Reichel

(57) **Abstract**

A tap tool holder for a tap tool is disclosed. The tap tool has a cylindrical body (11) and a tap (12) extended from the cylindrical body (11). The tap tool holder includes a bracket sleeve (100) for inserting the tap and a positioning collar (200). An annular inner step (130) is formed in one end of the bracket sleeve. The positioning collar (200) is carried on the annular inner step (130). The positioning collar (200) has an outer ring wall (201), and the outer ring wall is attached to the annular inner step (130). The positioning collar (200) has an inner ring wall (202), and a shape of the inner ring wall (202) corresponds to an outer side wall of the cylindrical body (11) so as to sleeve the cylindrical body (11). With the positioning collar (200) that can be replaced corresponding to tap tools, tap tools of various sizes can be positioned in the bracket sleeve (100) to facilitate tapping.

## Description

### BACKGROUND OF THE INVENTION

### Technical Field

The technical field relates to a tap tool holder, and more particular, to a tap tool holder to avoid deviation of tapping for a tap tool.

### Description of Related Art

A tap is used to tap and rotate inside an existing hole to form internal threads. In fact, the tap is quite easy to shake and deviate during the first two or three turns of tapping as the tap has not yet entered the hole. As a result, the deviation of the tap may cause it to be broken in the hole and hard to be taken out, or it may cause screw holes to be skewed and difficult to lock the screws.

In view of the above drawbacks, the Inventor proposes the present invention based on his expert knowledge and elaborate researches in order to solve the problems of prior art.

### SUMMARY OF THE INVENTION

The disclosure is directed to a tap tool holder to avoid deviation of tapping for a tap tool.

One of the exemplary embodiments provides a tap tool holder for a tap tool. The tap tool has a cylindrical body and a tap extended from one end of the cylindrical body along an axial direction of the cylindrical body. The tap tool holder comprises a bracket sleeve and a positioning collar. The bracket sleeve has two ends opened for inserting the tap. One end of the bracket sleeve is a tool end, and an annular inner step is formed in the tool end. The positioning collar is carried on the annular inner step so that an axial position of the positioning collar is positioned by the annular inner step. The positioning collar has an outer ring wall and the outer ring wall is attached to the annular inner step so that a radial position of the positioning collar is positioned by the annular inner step. The positioning collar has an inner ring wall, and a shape of the inner ring wall corresponds to an outer side wall of the cylindrical body so as to sleeve the cylindrical body.

One of the exemplary embodiments, wherein the bracket sleeve has at least one window on a side wall. Another end of the bracket sleeve is a workpiece end, and an end edge of the workpiece end forms an annular ridge. The bracket sleeve has a threaded hole penetrated through thereof, and the threaded hole is connected to the annular inner step. There is a screw in the threaded hole to abut against the positioning collar. An edge of the tool end is provided with a chamfer.

One of the exemplary embodiments, wherein one end of the positioning collar forms a positioning end surface abutting the annular inner step. An outer edge of the positioning end surface is provided with a chamfer. An inner edge of another end of the positioning collar forms a guiding taper surface connecting to the inner ring wall, and the guiding taper surface expands outwardly toward an outside of the positioning collar. The annular inner step includes a bearing surface and a vertical surface erected on an outer edge of the bearing surface and surrounding the bearing surface. The positioning end surface is stacked on the bearing surface, and the outer ring wall is attached to the vertical surface. The bracket sleeve has a threaded hole penetrated through thereof, and the threaded hole is connected to the vertical surface. There is a screw in the threaded hole to abut against the positioning collar, and the screw abuts the outer ring wall.

One of the exemplary embodiments, wherein the positioning collar that can be replaced corresponding to tap tools so that tap tools of various sizes can be positioned in the bracket sleeve to avoid deviation to facilitate tapping.

### BRIEF DESCRIPTION OF DRAWINGS

The features of the invention believed to be novel are set forth with particularity in the appended claims. The invention itself, however, may be best understood by reference to the following detailed description of the invention, which describes a number of exemplary embodiments of the invention, taken in conjunction with the accompanying drawings, in which:
FIG. 1 is a perspective explosion view of the tap tool holder of the present disclosed example.
FIG. 2 is a perspective schematic view of the tap tool holder of the present disclosed example.
FIG. 3 is a longitudinal sectional view of the tap tool holder of the present disclosed example.
FIG. 4 is an operation schematic view of the tap tool holder of the present disclosed example.
FIG. 5 is a schematic view of the replacement of the positioning collar of the tap tool holder of the present disclosed example.

### DETAILED DESCRIPTION OF THE PREFERRED EMBODIMENTS

In cooperation with attached drawings, the technical contents and detailed description of the invention are described thereinafter according to a number of preferable embodiments, not being used to limit its executing scope. Any equivalent variation or modification made according to appended claims is all covered by the claims claimed by the present invention.

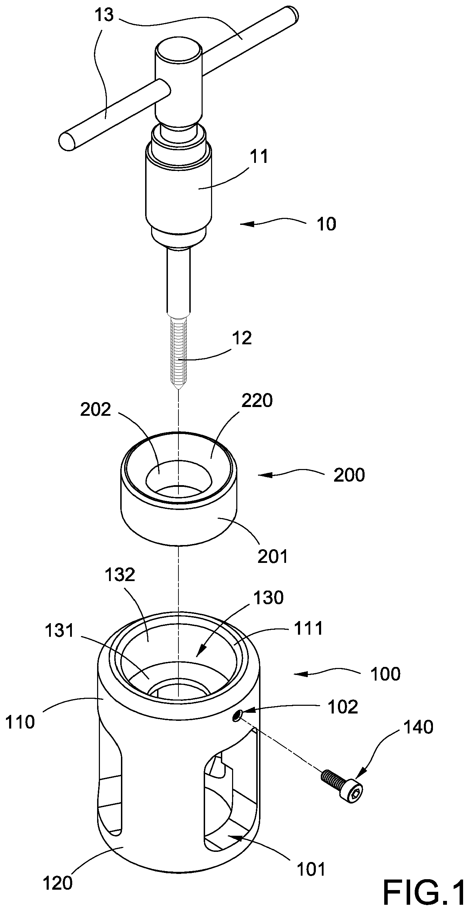

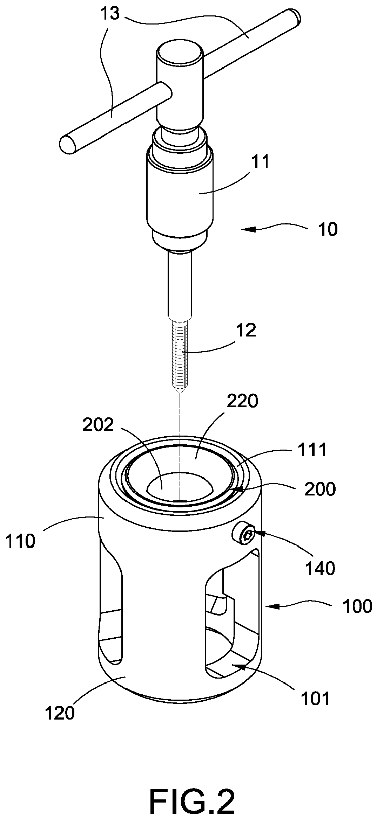

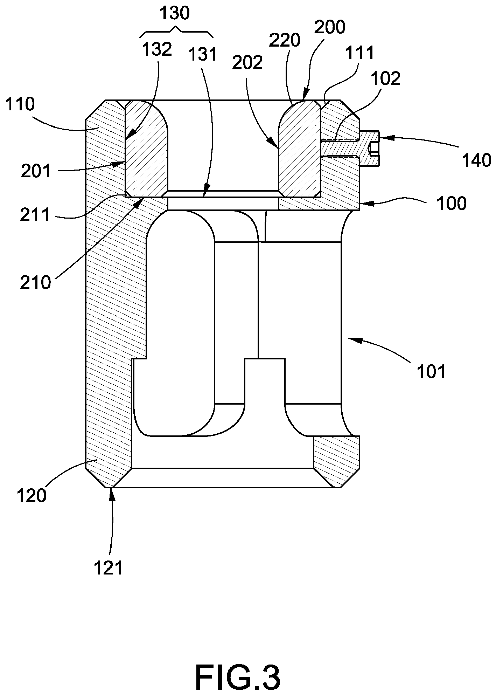

Please refer to FIG. 1 to FIG. 4. A preferred embodiment of the present disclosed example provides a tap tool holder used to guide a tap tool to tap the inner wall of a pre-drilled hole 21 on a workpiece 20. Specifically, the tap tool usually has a wrench 10 and a tap 12 clamped by the wrench 10. The wrench 10 generally has a cylindrical body 11, and the tap 12 is extended outward from one end of the cylindrical body 11 along an axial direction of the cylindrical body 11. A pair of handles 13 are extend from opposite sides of another end of the cylindrical body 11 along the radial direction of the cylindrical body 11 for pushing the cylindrical body 11 to rotate in its axial direction, so as to drive the tap 12 rotating in its axial direction. The tap 12 in the present embodiment is referred to an internal tap 12 used to insert the pre-drilled hole 21. When the tap 12 rotates in the pre-drilled hole 21, internal threads can be formed on the inner wall of the pre-drilled hole 21.

In the present embodiment, the tap tool holder of the present disclosed example includes a bracket sleeve 100 and a positioning collar 200. The positioning collar 200 is detachably assembled to the bracket sleeve 100. The specific structures of the bracket sleeve 100 and the positioning collar 200 are further described as follows.

The bracket sleeve 100 has two ends opened for inserting the tap 12 therein. One end of the bracket sleeve 100 is a tool end 110, and another end of the bracket sleeve 100 is a workpiece end 120. The tool end 110 is used to sleeve the cylindrical body 11 of the wrench 10, and the workpiece end 120 is used to abut the workpiece 20.

An annular inner step 130 is formed in the tool end 110. In the present embodiment, the annular inner step 130 is a concave stepped structure for accommodating the positioning collar 200. Specifically, the annular inner step 130 includes a bearing surface 131 and a vertical surface 132 erected on an outer edge of the bearing surface 131 and surrounds the vertical surface 132. The bracket sleeve 100 has at least one window 101 on a side wall. An end edge of the workpiece end 120 forms an annular ridge 121, and the annular ridge 121 is used to abut the workpiece 20 so that the bracket sleeve 100 and the workpiece 20 are in line contact to avoid shaking.

One end of the positioning collar 200 forms a positioning end surface 210. The positioning collar 200 has an outer ring wall 201, and the positioning collar 20 is carried on the annular inner step 130. Specifically, the positioning end surface 210 is stacked on the bearing surface 131, and the outer ring wall 201 is attached to the vertical surface 132. The positioning end surface 210 is abutted the annular inner step 130 so that an axial position of the positioning collar 200 is positioned by the annular inner step 130. In addition, the outer ring wall 201 is attached to the annular inner step 130 so that a radial position of the positioning collar 200 is positioned by the annular inner step 130.

The positioning collar 200 has an inner ring wall 202, and the shape of the inner ring wall 202 corresponds to the outer side wall of the cylindrical body 11 of the wrench 10 so as to sleeve the cylindrical body 11. An inner edge of another end of the positioning collar 200 forms a guiding taper surface 220 connecting to the inner ring wall 202, and the guiding taper surface 220 expands outwardly toward an outside of the positioning collar 200. The cylindrical body 11 can be guided into the positioning collar 200 by the guiding taper surface 220.

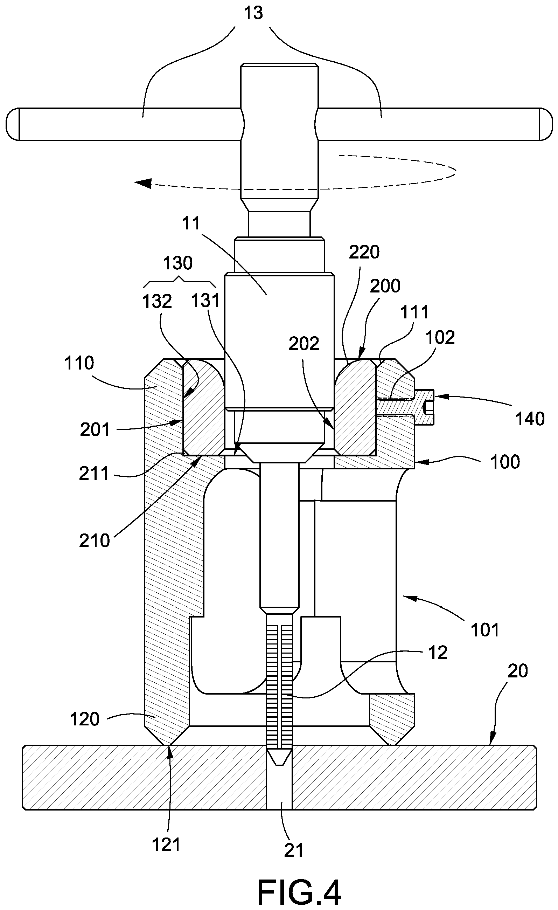

Please refer to FIG. 4. When tapping, the inner ring wall 202 of the positioning collar 200 and the outer side wall of the cylindrical body 11 are attached to each other, and the cylindrical body 11 can be moved relative to the positioning collar 200 in the axial direction to avoid the deviation of tapping. The window 101 of the bracket sleeve 100 provides users to view the tap 12 aligning the pre-drilled hole 21 on the workpiece 20 before tapping, meanwhile chips can be discharged during tapping.

In the present embodiment, the bracket sleeve 100 has a threaded hole 102 penetrated through thereof. The threaded hole 102 is connected to the annular inner step 130, and specifically, the threaded hole 102 is connected to the vertical surface 132. There is a screw 140 in the threaded hole 102 to abut against the positioning collar 200. The screw 140 inserts the bracket sleeve 100 through the threaded hole 102 to abut the outer ring wall 201, and the positioning collar 200 is tightened by the force of the threads.

In the present embodiment, an edge of the tool end 110 is provided with a chamfer 111. An outer edge of the positioning end surface 210 is provided with another chamfer 211 correspondingly. The chamfer 111 of the tool end 110 corresponds to the chamfer 211 of the positioning end surface 210 to guide the positioning collar 200 inserting the tool end 110, so that the positioning collar 200 will be easy to be placed in the annular inner step 130.

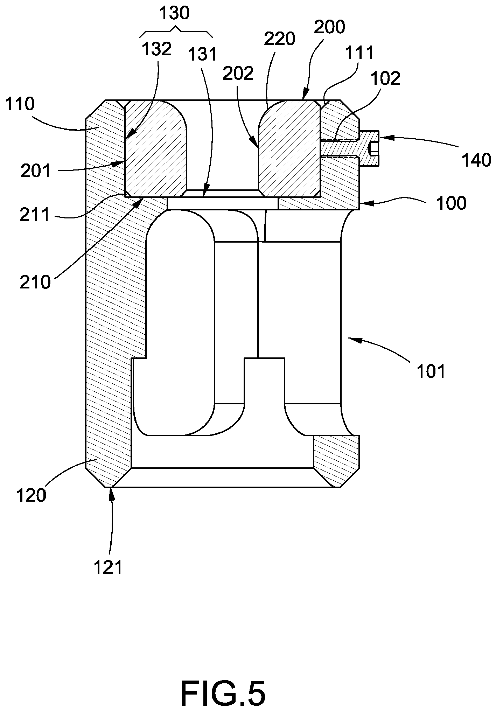

In the tap tool holder of the present disclosed example, the positioning collar 200 is detachably assembled to the bracket sleeve 100, and the shape of the inner ring wall 202 of the positioning collar 200 corresponds with the outer side wall of the cylindrical body 11 of the tap tool to sleeve the cylindrical body 11. Therefore, as shown in FIG. 5. When replacing tap tools of different sizes, the positioning collar 200 can be detached from the bracket sleeve 100 and replaced with another positioning collar 200 corresponding to the shape of the inner ring wall 202. With the positioning collar 200 that can be replaced corresponding to tap tools, tap tools of various sizes can be positioned in the bracket sleeve 100 to avoid deviation to facilitate tapping.

## Claims

1. A tap tool holder for a tap tool, in which the tap tool has a cylindrical body (11) and a tap (12) extended from one end of the cylindrical body (11) along an axial direction of the cylindrical body (11), and the tap tool holder comprising:
a bracket sleeve (100), two ends of the bracket sleeve (100) being opened for inserting the tap (12), and one end of the bracket sleeve (100) being a tool end (110), and an annular inner step (130) being formed in the tool end (110); and
a positioning collar (20), carried on the annular inner step (130) so that an axial position of the positioning collar (200) is positioned by the annular inner step (130); the positioning collar (200) having an outer ring wall (201), and the outer ring wall (201) being attached to the annular inner step (130) so that a radial position of the positioning collar (200) is positioned by the annular inner step (130); and the positioning collar (200) having an inner ring wall (202), and a shape of the inner ring wall (202) corresponding to an outer side wall of the cylindrical body (11) so as to sleeve the cylindrical body (11).

2. The tap tool holder according to claim 1, wherein the bracket sleeve (100) has at least one window (101) on a side wall.

3. The tap tool holder according to claim 1 or 2, wherein another end of the bracket sleeve (100) is a workpiece end (120), and an end edge of the workpiece end (120) forms an annular ridge (121).

4. The tap tool holder according to any of the claims 1 to 3, wherein the bracket sleeve (100) has a threaded hole (102) penetrated through thereof, and the threaded hole (102) is connected to the annular inner step (130); and there is a screw (140) in the threaded hole (102) to abut against the positioning collar (200).

5. The tap tool holder according to any of the claims 1 to 4, wherein an edge of the tool end (110) is provided with a chamfer (111).

6. The tap tool holder according to any of the claims 1 to 5, wherein one end of the positioning collar (200) forms a positioning end surface (210) abutting the annular inner step (130).

7. The tap tool holder according to claim 6, wherein an outer edge of the positioning end surface (210) is provided with a chamfer (211).

8. The tap tool holder according to any of the claims 6 to 7, wherein an inner edge of another end of the positioning collar (200) forms a guiding taper surface (220) connecting to the inner ring wall (202), and the guiding taper surface (220) expands outwardly toward an outside of the positioning collar (200).

9. The tap tool holder according to any of the claims 6 to 8, wherein the annular inner step (130) includes a bearing surface (131) and a vertical surface (132) erected on an outer edge of the bearing surface (131) and surrounding the bearing surface (131); and the positioning end surface (210) is stacked on the bearing surface (131), and the outer ring wall (201) is attached to the vertical surface (132).

10. The tap tool holder according to claim 9, wherein the bracket sleeve (100) has a threaded hole (102) penetrated through thereof, and the threaded hole (102) is connected to the vertical surface (132); and there is a screw (140) in the threaded hole (102) to abut against the positioning
collar (200), and the screw (140) abuts the outer ring wall (201).
